# EUROPÄISCHE PATENTSCHRIFT

(11) **EP 2 783 561 B1**
(45) Veröffentlichungstag und Bekanntmachung des Hinweises auf die Patenterteilung: **23.03.2016**
(21) Anmeldenummer: 13001573.8
(22) Anmeldetag: 27.03.2013
(51) Int. Cl.: A01D 34/00

(54) **Selbstfahrendes Arbeitsgerät**
Self-propelled work device
Appareil de travail automobile

(43) Veröffentlichungstag der Anmeldung: 01.10.2014
(73) Patentinhaber: Viking GmbH, 6336 Langkampfen (AT)
(72) Erfinder: Schäfer, Frieder, 6330 Kufstein (AT)
(74) Vertreter: Wasmuth, Rolf

(56) Entgegenhaltungen:
- WO-A2-01/91623
- US-A- 5 163 273

## Beschreibung

Die Erfindung betrifft ein selbstfahrendes Arbeitsgerät, insbesondere einen Rasenmäher; der im Oberbegriff des Anspruchs 1 angegebenen Gattung.

Aus der US 5,163,273 A ist ein autonomer, selbstfahrender Rasenmäher mit einem Fahrgestell und einer am Fahrgestell befestigten Haube bekannt, welche am Fahrgestell angeordnete Geräteeinheiten wie einen Antriebsmotor, Antriebsräder oder das Werkzeug des Rasenmähers überdeckt. Die Haube ist relativ zum Fahrgestell beweglich gehalten, wobei ein Sensor eine Auslenkung der Haube relativ zum Fahrgestell erfasst und abhängig von der Relativlage der Haube ein Ausgangssignal abgibt, das in einer Steuereinheit zum Abschalten des Antriebsmotors, des Werkzeugs des Rasenmähers oder dgl. Geräteeinheiten genutzt werden kann. Eine Auslenkung der Haube tritt dann auf, wenn das autonom fahrende Arbeitsgerät gegen ein Hindernis stößt oder eine Person unbefugt die Haube berührt oder sich gar auf die Haube setzt. Gibt der Sensor ein durch die Auslenkung verändertes Ausgangssignal ab, wird die Steuereinheit die Antriebsräder und/oder das Messer anhalten.

Aus der WO 01/91623 A2 ist ein selbstfahrender Putzroboter, beispielsweise ein Staubsauger, mit einem Fahrgestell und einer am Fahrgestell befestigten Haube bekannt. Die Haube ist relativ zum Fahrgestell beweglich gehalten, wobei ein Sensor eine Auslenkung der Haube relativ zum Fahrgestell erfasst. Ein Stoppschalter zum Ausschalten des Antriebsmotors ist in einer Ausnehmung der Haube angeordnet, wobei die Ausnehmung im Vergleich zum Stoppschalter überdimensioniert ist, so dass die Haube trotz Stoppschalter relativ zum Fahrgestell beweglich ist.

Will ein unbeteiligter Dritter willkürlich den autonom fahrenden Rasenmäher anhalten, fehlt ihm die Information für die entsprechende Bedienung. Er kann daher das selbstfahrende Arbeitsgerät ohne Schwierigkeiten nicht gezielt abschalten.

Der Erfindung liegt die Aufgabe zugrunde, ein selbstfahrendes Arbeitsgerät der gattungsgemäßen Art derart weiterzubilden, dass ohne genaue Kenntnis der Bedienung des Arbeitsgerätes auch ein unbeteiligter Dritter das Arbeitsgerät schnell und zielgerichtet abschalten kann.

Diese Aufgabe wird mit den Merkmalen des Anspruchs 1 gelöst.

Gemäß der Erfindung ist auf dem Fahrgestell ein manuelles Schaltelement angeordnet, welches einen für einen Benutzer frei zugänglichen Taster aufweist. Der Taster kann die Form einer Kappe, eines Schalters, eines Knopfes, einer Taste, einer Stopptaste, oder dgl. aufweisen.

Der Taster liegt manuell zugänglich in einer Ausnehmung der Haube, wobei der Taster unabhängig von der Haube zu betätigen ist, also von der Haube entkoppelt ist. Durch Niederdrücken des Tasters wird das Schaltelement betätigt und zweckmäßig der Antriebsmotor und/oder das rotierende Werkzeug z. B. über die Steuereinheit abgeschaltet. Da der Taster in einer Ausnehmung der Haube liegt, kann ein unbeteiligter Dritter sofort erkennen, dass in der Haube ein für einen Benutzer von außen manuell zugängliches Bedienelement des Arbeitsgerätes vorgesehen ist. Die konstruktive Anordnung des Tasters in einer Ausnehmung der Haube hebt ihn als Stoppschalter hervor. Eine unterschiedliche Farbgebung der Haube und des Tasters kann diese Wirkung signifikant erhöhen. Aufgrund der Ausnehmung in der Haube ist ein direkter Zugriff nur auf das Schaltelement möglich, so dass beim Niederdrücken des Tasters nur dieser selbst und nicht die gesamte Haube zu bewegen ist. Wird das Schaltelement ausgelöst, werden unmittelbar und/oder über die Steuereinheit der Antriebsmotor und/oder das rotierende Schneidwerkzeug angehalten oder abgeschaltet, das autonom fahrende Arbeitsgerät also direkt deaktiviert.

Die Haube und der Taster sind derart miteinander gekoppelt, dass ein Niederdrücken der Haube den Taster mitnimmt, also das Schaltelement betätigt wird. Auch durch Niederdrücken der Haube kann somit das Arbeitsgerät unmittelbar deaktiviert werden, z. B. ein Abschalten des Antriebsmotors ausgelöst werden Das Schaltelement kann durch den Taster direkt oder durch die Wirkverbindung über die Haube indirekt betätigt werden.

In einfacher Ausgestaltung der Erfindung wird eine Kopplung dadurch erzielt, dass die Haube einen Mitnahmerand des Tasters übergreift. Die Kopplung zwischen der Haube und dem Taster kann auch über mindestens ein Zwischenelement ausgeführt sein. Dabei kann mit dem Zwischenelement beispielsweise eine Abdichtung erzielt werden, um ein Eindringen von Schmutz unter die Haube zu verhindern oder eine Dämpfung von Vibrationen zu erzielen.

Vorteilhaft liegt die Haube in ihrer Ruhestellung auf dem Mitnahmerand des Tasters auf. Dadurch kann einerseits eine Abdichtung zwischen Taster und Haube erzielt werden; andererseits ist ein Betätigungsspiel zwischen Haube und Taster minimiert, so dass beim Niederdrücken der Haube der Taster sofort in Bewegungsrichtung der Haube mitgenommen wird. Es ist nur wenig, insbesondere ein sehr geringer Tothub vorhanden. Vorteilhaft ist die Ausbildung so getroffen, dass der Tothub etwa Null ist.

Vorteilhaft steht der Taster über die Oberseite der Haube über. Dadurch ist der Taster als separates Bedienelement des Arbeitsgerätes hervorgehoben. Der Überstand über die Oberseite der Haube erleichtert einen einfachen Zugang zum Taster und eine zielgerichtete Benutzung. Damit unterstützt der Überstand des Tasters ein schnelles Abschalten des Arbeitsgerätes.

Vorteilhaft ist der Taster in einer Signalfarbe ausgeführt, beispielsweise einer optisch hervorgehobenen Farbe wie Signalorange, Signalrot, Signalgelb oder dergleichen. Dadurch wird die Funktion eines Stoppschalters auch für einen Dritten sofort erkennbar.

Vorteilhaft ist im Taster eine Anzeigeeinrichtung angebracht. Die Anzeigeeinrichtung kann eine Leuchteinheit umfassen, beispielsweise eine LED, ein Display oder Ähnliches. Die Anzeigeeinrichtung kann den Zustand des Schaltelementes wiedergeben, z. B. durch permanentes Leuchten oder durch Blinken. Mittels der Anzeigeeinrichtung kann angezeigt werden, ob das Schaltelement in Bereitschaftsstellung oder in ausgelöster Schaltstellung steht. Zweckmäßig besteht der Taster aus einem lichtdurchlässigen, z. B. transparenten Material, so dass die Anzeigeeinrichtung leicht erkennbar ist. Der Taster kann aus einem farblosen Material oder auch aus einem klaren Material bestehen.

Vorteilhaft ist das Schaltelement als elektrischer Schalter ausgeführt. Der Schalter kann zweckmäßig zwei Schaltstellungen aufweisen. In einer ersten Schaltstellung, der betätigten Stellung, ist z. B. der Antriebsmotor abgeschaltet; in einer zweiten Schaltstellung, der Betriebsstellung, ist der Antriebsmotor betriebsbereit geschaltet. Die erste und zweite Schaltstellung kann auch so ausgeführt sein, dass die erste Schaltstellung die Betriebsstellung und die zweite Schaltstellung die betätigte Stellung ist.

Weitere Merkmale der Erfindung ergeben sich aus der Beschreibung und der Zeichnung, in der nachfolgend im Einzelnen beschriebene Ausführungsbeispiele der Erfindung dargestellt sind. Es zeigen:
- Fig. 1: in Draufsicht eine schematische Darstellung eines selbstfahrenden Arbeitsgeräts am Beispiel eines Rasenmähers,
- Fig. 2: eine perspektivische Darstellung des selbstfahrenden Arbeitsgerätes nach Fig. 1,
- Fig. 3: eine Teilansicht des selbstfahrenden Arbeitsgerätes nach Fig. 2,
- Fig. 4: eine schematische Darstellung eines Schaltelements mit einer Anzeigeeinheit,
- Fig. 5: eine schematische Darstellung eines Schaltelements entsprechend Fig. 4 mit einer Anzeigeeinheit in einer anderen Ausführungsform,
- Fig. 6: in schematischer Darstellung einen Schnitt durch ein auf einem Fahrgestell des Arbeitsgerätes angeordnetes Schaltelement,
- Fig. 7: eine schematische Darstellung der Schaltstellungen des Schaltelementes,
- Fig. 8: eine schematische Darstellung der Koppelung zwischen einer Haube des Arbeitsgerätes und einem Taster des Schaltelementes,
- Fig. 9: eine schematische Darstellung der Koppelung entsprechend Fig. 8 in einer anderen Ausführungsform,
- Fig. 10: eine schematische Darstellung eines weiteren Ausführungsbeispiels einer Koppelung zwischen der Haube und dem Taster.

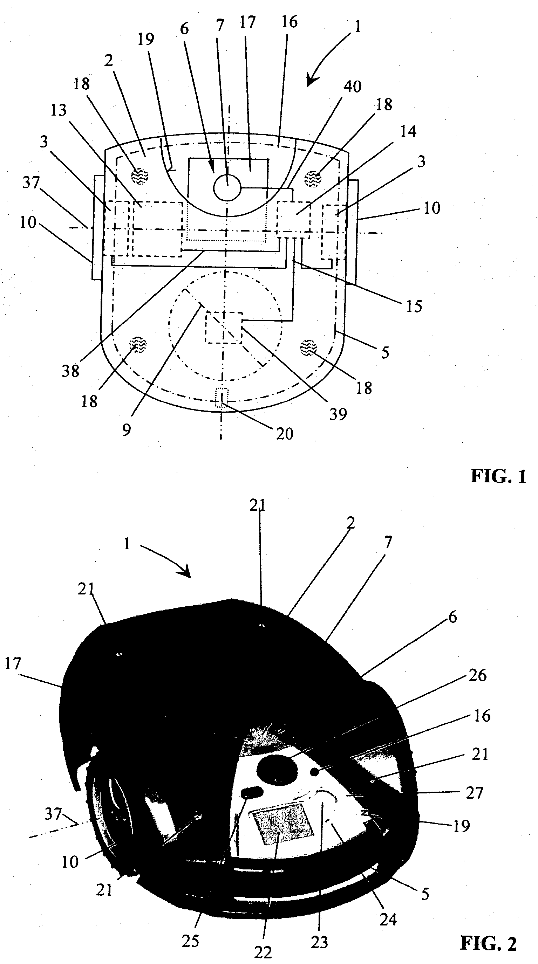

Fig. 1 zeigt als Ausführungsbeispiel für ein selbstfahrendes Arbeitsgerät 1 einen autonom fahrenden Rasenmäher, einen sogenannten Robotermäher. Der autonome Rasenmäher bewegt sich selbstständig innerhalb einer vom Benutzer vorgegebenen Fläche.

Das Arbeitsgerät 1 besitzt ein Fahrgestell 5. Auf dem Fahrgestell 5 ist eine Haube 2 befestigt. Die Haube 2 kann als Abdeckung für das Fahrgestell 5 dienen und schützt auf dem Fahrgestell 2 angeordnete Geräteeinheiten. Die Haube 2 ist über eine Aufhängung 21 (Fig. 2) derart am Fahrgestell 5 gehalten, dass die Haube 2 gegenüber dem Fahrgestell 5 beweglich ist. Die Aufhängung 21 kann als flexible Verbindung zum Fahrgestell 5 vorgesehen sein; in einem bevorzugten Ausführungsbeispiel ist eine Federverbindung zwischen der Haube 2 und dem Fahrgestell 5 vorgesehen. Hierzu ist die Haube 2 an mehreren Lagerstellen, insbesondere vier Lagerstellen über je eine Feder 18 (Fig. 1), z. B. eine Schraubenfeder, auf dem Fahrgestell 5 gehalten. Die Federn 18 wirken wie Joysticks und ermöglichen eine Bewegung der Haube 2 in alle Raumrichtungen des kartesischen Koordinatensystems, insbesondere ein Niederdrücken der Haube 2.

Die Haube 2 ist relativ zum Fahrgestell 5 bewegbar zu gestalten, was in Weiterbildung der Erfindung auch durch eine Ausbildung der Haube 2 aus einem elastischen Material erzielt sein kann. In einer derartigen Ausführungsform besteht die Haube 2 vorteilhaft aus einem dehnbaren oder reversibel verformbaren elastischen oder elastisch nachgiebigen Material.

Das selbstfahrende Arbeitsgerät 1 verfügt über mindestens ein angetriebenes Rad 10 und mindestens ein selbstlenkendes Rad 20, welche am Fahrgestell 5 befestigt sind. Beispielhaft sind in Figur 1 zwei angetriebene Räder 10 dargestellt sowie ein selbstlenkendes Rad 20. Das angetriebene Rad 10 dient zum Antrieb des Rasenmähers auf der Bodenfläche, wobei das selbstlenkende Rad 20 im gezeigten Ausführungsbeispiel lediglich geführt ist und selbstlenkend sein kann. Das selbstfahrende Arbeitsgerät 1 weist am Fahrgestell 5 befestigte Antriebsmotoren 3, 39 auf, die die Räder 10 und mindestens ein Werkzeug 9, zum Beispiel ein rotierendes Schneidmesser antreiben. Vorteilhaft sind mindestens zwei Antriebsmotoren 3, 39 vorgesehen, wobei ein Antriebsmotor 3 als Fahrantrieb dient und ein Antriebsmotor 39 ein Werkzeug 9 antreibt. Im gezeigten Ausführungsbeispiel ist je ein Antriebsmotor 3 für die Räder 10 und ein Antriebsmotor 39 zum Antrieb des Werkzeuges 9 vorgesehen. Da jedes angetriebene Rad 10 einen eigenen Antriebsmotor 3 aufweist, kann durch eine unterschiedliche Winkelgeschwindigkeit der um die Radachse 37 drehenden Räder 10 eine Kurvenfahrt, also eine rotatorische Bewegung des Rasenmähers 1 ausgeführt werden. Konstruktiv vorteilhaft drehen beide Räder 10 um eine gemeinsame Radachse 37.

Zur Versorgung der Antriebsmotoren 3, 39 mit elektrischer Energie ist ein Akku 13 am Fahrgestell 5 befestigt. Der Akku 13 ist über ein Kabel 38 mit einer Steuereinheit 14 verbunden, über die den mit Kabeln 15 angeschlossenen Antriebsmotoren 3, 39 elektrische Energie zugeführt wird. Die Steuereinheit 14 steuert das selbstfahrende Arbeitsgerät 1 in der Ebene, indem die Antriebsmotoren 3, 39 entsprechend betrieben werden.

An die Steuereinheit 14 ist über eine Signalleitung 40 ein Schaltelement 6 (Fig. 1, 2, 6, 7) elektrisch angeschlossen. Das Schaltelement 6 liegt unterhalb eines manuellen Tasters 7, also zwischen dem Taster 7 und dem Fahrgestell 5. Wie in Figur 1 schematisch dargestellt, weist der Taster 7 einen Mitnahmerand 17 auf. Der Taster7 kann in einer signifikanten Farbe ausgeführt sein, z. B. einer ins Auge fallenden Farbe wie Signalrot, Signalgelb, Signalorange oder dgl. und in einer geeigneten Form ausgelegt sein, z. B. einer zylindrischen Form wie in Figur 1 dargestellt, oder einer dreieckigen Form wie in Figur 2 gezeigt. Der Taster bildet so einen manuellen Stoppschalter, dessen Funktion sich einem unbeteiligten Dritten aufdrängt.

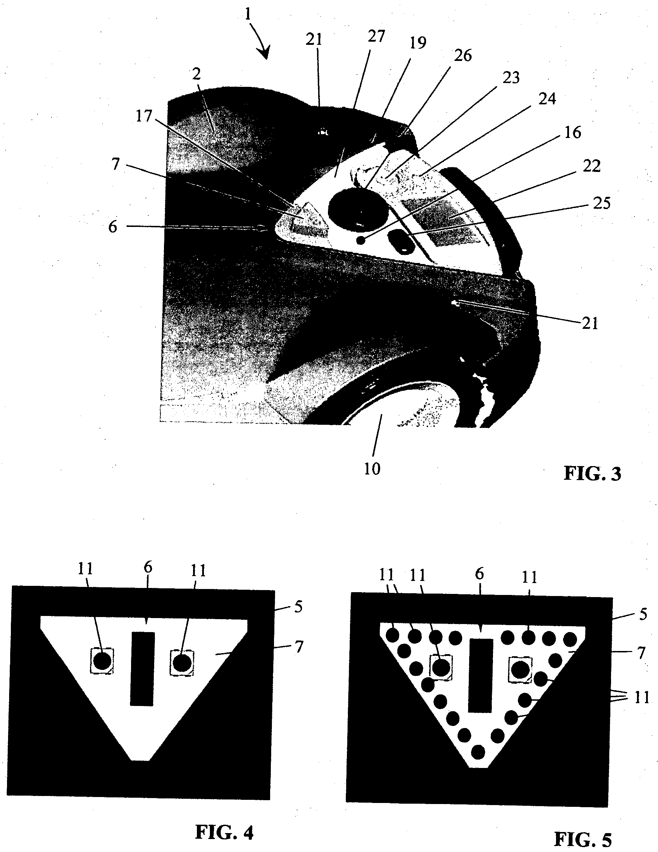

In Figur 3 ist zusätzlich dargestellt, dass in den Taster das Wort "Stop" konstruktiv eingeformt ist, um die Funktion des Tasters 7 weiter hervorzuheben. Der Taster 7 ist in einer Ausnehmung 16 der Haube 2 vorgesehen, die auch als Öffnung in der Haube 2 ausgebildet sein kann. Die Ausnehmung 16 der Haube 2 wird im Ausführungsbeispiel von einem Rand 19 der Haube 2 begrenzt. Die Ausnehmung 16 kann einen geschlossenen Rand 19 aufweisen, wie in Figur 2 gezeigt, oder einen offenen Rand 19 bilden, wie in Figur 1 gezeigt.

Der Taster 7 weist einen Mitnahmerand 17 auf, der - zumindest teilweise - von der Haube 2 übergriffen ist. Die Haube 2 und der Taster 7 sind derart miteinander gekoppelt, dass der Taster 7 direkt - ohne Verlagerung der Haube 2 - manuell betätigt werden kann. Der Taster 7 kann aufgrund der Koppelung über den Mitnahmerand 17 aber auch durch die Haube 2 mittelbar manuell betätigt werden, indem die Haube 2 niedergedrückt wird und dabei den Taster 7 über den Mitnahmerand 17 mitnimmt. Eine Betätigung des Tasters 7 über die Haube 2 kann beispielsweise durch ein auf den Rasenmäher aufsitzendes Kind ausgelöst werden oder durch eine dritte Person durch Niederdrücken der Haube 2. Bei direkter oder indirekter Betätigung des Tasters 7 wird das Schaltelement 6 ausgelöst, wobei die Zustandsänderung der Schaltstellung des Schaltelementes 6 über die Signalleitung 40 der Steuereinheit 14 mitgeteilt ist. Die Steuereinheit 14 schaltet daraufhin zweckmäßig den Antriebsmotor 3, 39 ab. In einer weiteren Ausführungsform der Erfindung kann das manuelle Schaltelement 6 den Antriebsmotor 3 des Fahrantriebs ausschalten. Es kann auch vorteilhaft sein, das manuelle Schaltelement 6 zum Abschalten des Antriebsmotors 39 für das Werkzeug 9 zu nutzen. In der dargstellten Ausführungsform schaltet das manuelle Schaltelement 6 den Antriebsmotor 3 des Fahrantriebs und den Antriebsmotor 39 für das Werkzeug 9 ab.

Figur 2 zeigt eine perspektivische Darstellung des selbstfahrenden Arbeitsgerätes 1 als Rasenmäher. Die Haube 2 übergreift das Fahrgestell 5 und die angetriebenen Räder 10, das selbstlenkende Rad 20, das Schneidwerkzeug 9, den Antriebsmotor 3 und andere Geräteeinheiten. Die Haube 2 zeigt eine Ausnehmung 16 mit einem geschlossenen Rand 19, also eine Öffnung. In der Öffnung ist der Taster 7 mit dem Schaltelement 6 angeordnet. Der Mitnahmerand 17 des Tasters 7 wird von der Haube 2 teilweise überlappt. In der Öffnung liegt ferner eine Abdeckung 27 des Fahrgestells 5. In der Abdeckung 27 liegen weitere Bedienelemente des Arbeitsgerätes 1, z. B. ein Drehknopf für eine Schnitthöhenverstellung 26, ein Betriebsschalter 25 zum Ein- oder Ausschalten des selbstfahrenden Arbeitsgerätes 1, ein Display 22 zur Anzeige von Betriebszuständen sowie Cursortasten 23 und eine Bestätigungstaste 24. Über das Display 22 kann z. B. der Ladezustand des Akkus 13, die eingestellte Schnitthöhe, die schon bearbeitete Fläche, die verstrichene Arbeitszeit, die verbleibende Arbeitszeit bis zum nächsten Laden des Akkus 13 usw. angezeigt sein. Weiter können im Display 22 Betriebseinstellungen angezeigt und ausgewählt werden. Solche Betriebseinstellungen sind beispielsweise die Arbeitsgeschwindigkeit, die Arbeitszeit, etc.

Die am Display 22 angezeigten Betriebseinstellungen werden durch die Cursortasten 23 ausgewählt und die Auswahl durch die Bestätigungstaste 24 bestätigt.

Figur 3 zeigt einen Ausschnitt aus Figur 2. Insbesondere der Bereich um die Ausnehmung 16 in der Haube 2 ist vergrößert dargestellt. Der Taster 7 trägt im Ausführungsbeispiel die konstruktive Einprägung "Stop". Der gesamte Taster 7 inklusive seines Mitnahmerandes 17 ist z. B. in der Farbe Signalrot ausgeführt. Diese optische Hervorhebung des Tasters 7 gibt zu erkennen, dass der Taster 7 die Funktion eines manuellen Stoppschalters hat. Zur leichten Zugänglichkeit des manuellen Tasters 7 ist in Figur 3 dargestellt, dass der Taster 7 über die Oberfläche der Haube 2 hinausragt.

Die Figuren 4 und 5 zeigen eine in den Taster integrierte Anzeigeeinrichtung 11, die unterhalb des manuellen Tasters 7, also zwischen Taster 7 und Fahrgestell 5 angeordnet ist. Figur 5 zeigt eine Variante der Anzeigeeinrichtung 11 aus Figur 4. Der Taster 7 ist in beiden Figuren 4 und 5 transparent dargestellt, besteht also aus einem lichtdurchlässigen, insbesondere transparenten, insbesondere farblosen Material, so dass die Anzeigeeinrichtung 11 durch den Taster 7 leuchten kann oder die Anzeigeeinrichtung 11 den Taster 7 so erhellt, dass eine Information der Anzeigeeinrichtung 11 durch den Taster 7 erkennbar wird. Die Anzeigeeinrichtung 11 kann dazu verwendet werden, den Taster 7 lediglich zu erhellen und damit die Bereitschaftsstellung des Tasters 7 als Stoppschalter zu visualisieren. Die Anzeigeeinrichtung 11 kann aber auch dazu verwendet werden, beispielsweise durch Dauerleuchten oder Blinken, eine bestehende Schaltstellung des Schaltelements 6 anzuzeigen.

Figur 5 zeigt beispielhaft, dass die Anzeigeeinrichtung 11 auch mehrfach ausgeführt sein kann. Mehrere Anzeigeeinrichtungen 11 können die Leuchtkraft verstärken. Durch mehrere Anzeigeeinrichtungen 11 können auch mehr Informationen übermittelt werden, beispielsweise durch Blinken beziehungsweise Ein- und Ausschalten von verschiedenen Anzeigeeinrichtungen 11. Eine Anzeigeeinrichtung 11 kann aus beliebigen Leuchtmitteln bestehen, vorteilhaft besteht das Leuchtmittel aus einer LED.

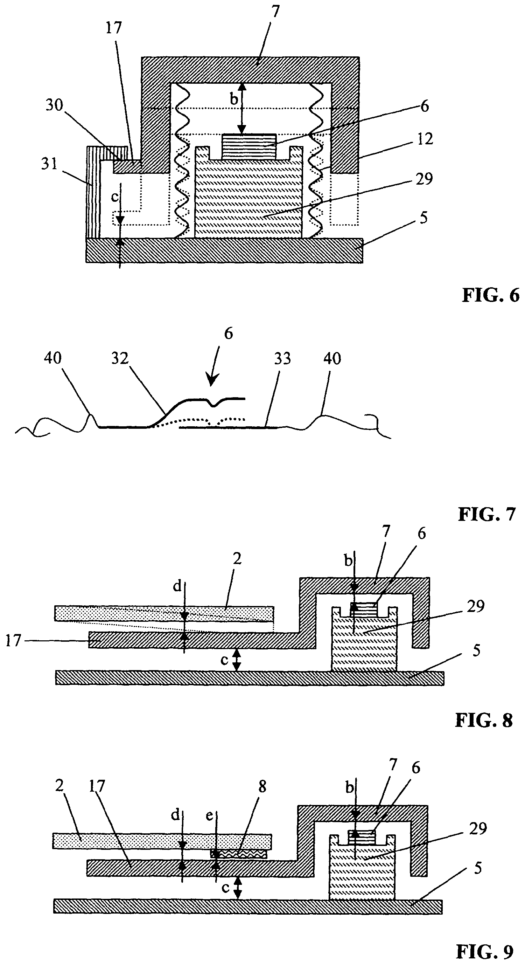

Figur 6 zeigt einen schematischen Schnitt durch den Taster 7 und das Schaltelement 6. Der manuelle Taster 7 ist in Bereitschaftsstellung dargestellt und gestrichelt in Schaltstellung wiedergegeben. In der ersten Schaltstellung, der Bereitschaftsstellung wird der Taster 7 durch mindestens eine Feder 12 in einem Abstand b zum Schaltelement gehalten. Hierbei berührt ein Teil des Tasters 7 über eine Kontaktfläche 30 einen Beschlag 31, um die Rückstellung der Feder so zu begrenzen, dass zwischen Taster 7 und Schaltelement 6 der Abstand b besteht. Am Fahrgestell 5 ist ein Unterbau 29 des Schaltelements 6 befestigt. Der Unterbau 29 fixiert als Halterung das Schaltelement 6.

Bei Betätigung des Tasters 7 wird der Taster 7 gegen die Feder 12 in Richtung auf das Schaltelement 6 gedrückt (strichlierte Darstellung). In der Schaltstellung des Tasters 7 verbleibt ein Abstand c zum Fahrgestell 5.

In einer weiteren Ausgestaltung der Erfindung kann der Taster 7 einteilig mit der Feder 12 ausgebildet und somit als Köperfeder ausgeführt sein. In einer vorteilhaften Ausgestaltung ist der Taster 7 zumindest teilweise reversibel verformbar. Im verformbaren Teil des Tasters 7 entsteht hierbei eine Rückstellkraft. Die Rückstellkraft bewirkt ein Rückstellen des Tasters 7. Damit ist die Funktionsweise ähnlich zur Ausführung mit einer Feder 12.

In den Figuren 2, 4, 5, 6, 8, 9 ist das Schaltelement 6 nur schematisch wiedergegeben. Ein beispielhafter konstruktiver Aufbau des Schaltelementes 6 ist in Figur 7 dargestellt. Das Schaltelement 6 besteht aus einem Schaltkontakt 32 und einem Gegenkontakt 33. In der ersten Schaltstellung, der Bereitschaftsstellung des Tasters 7 sind die Schaltkontakte 32, 33 offen. In der zweiten Schaltstellung des Tasters 7 liegen der Schaltkontakt 32 und der Gegenkontakt 33 aneinander an. Der geschlossene Kontakt wird über die Steuerleitung an die Steuereinheit 14 gemeldet. Die Steuereinheit 14 verarbeitet das Signal und schaltet z. B. den Antriebsmotor ab. Das Schaltelement 6 kann auch als Näherungsschalter wie einen Reedschalter, als Induktionsgeber, als kapazitiver Näherungssensor oder dgl. Schaltelement ausgeführt sein. Es ist lediglich notwendig, dass eine Zustandsänderung des Schaltelementes 6 von der Steuereinheit 14 erkannt werden kann.

Figur 8 zeigt schematisch das Auslösen des Schaltelements 6 durch eine Verlagerung der Haube 2. Das Schaltelement 6 ist auf einem Unterbau 29 befestigt, welcher am Fahrgestell 5 befestigt ist. Zwischen dem Schaltelement 6 und dem Taster 7 ist in Bereitschaftsstellung ein Abstand b vorhanden. Wird der Taster 7 niedergedrückt, wird das Schaltelement 6 betätigt und durch Schließen der Kontakte eine Zustandsänderung ausgelöst. Die Steuereinheit 14 erkennt die Zustandsänderung und schaltet z. B. die Antriebsmotoren 3 oder 39 ab.

Die Haube 2 überlappt den Mitnahmerand 17 zumindest teilweise, so dass bei Niederdrücken der Haube 2 das Schaltelement 6 ausgelöst wird. Die Haube 2 überwindet dabei einen möglichen Abstand d zwischen Haube 2 und Mitnahmerand 17. In der zweiten Schaltstellung ist ein kleinster Abstand c zwischen Fahrgestell 5 und Taster 7 vorhanden. Der Abstand c ist in Bereitschaftsstellung, der ersten Schaltstellung -größer als der Abstand b zwischen Schaltelement 6 und Taster 7. Anwendungsfreundlich ist der Abstand d zwischen Haube 2 und Taster 7 möglichst klein gehalten, um bei Niederdrücken der Haube 2 das Schaltelement 6 möglichst zügig zu betätigen, also einen Tothub zu vermeiden. Der Abstand d zwischen Haube 2 und Taster 7 kann auch entfallen, wodurch die Haube 2 unmittelbar auf dem Mitnahmerand 17 des Tasters 7 aufliegt.

Figur 9 zeigt eine Variante des Ausführungsbeispiels nach Figur 8. Zwischen der Haube 2 und dem Taster 7 ist ein Zwischenelement 8 eingefügt. Das Zwischenelement 8 kann sowohl an der Haube 2, als auch am Taster 7 angebracht sein. Das Zwischenelement 8 verringert den Abstand d zwischen der Haube 2 und dem Mitnahmerand 17 des Tasters 7 auf den Abstand e zwischen Zwischenelement 8 und Taster 7. Das Zwischenelement 8 verhindert ein Eindringen von Schmutz zwischen Haube 2 und Taster 7. Das Material des Zwischenelements 8 ist nach Anwendungsfall wählbar, beispielsweise können feste Materialien wie Kunststoff oder Metall oder auch flexible Materialien wie Schaumstoff oder Moosgummi, etc. Verwendung finden.

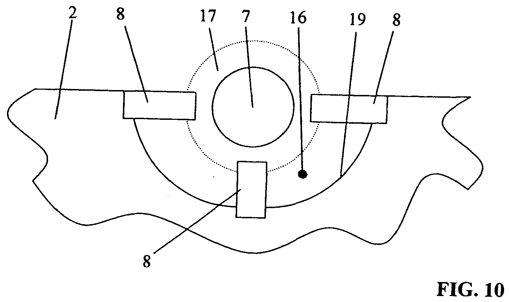

Figur 10 zeigt ein weiteres Ausführungsbeispiel einer Koppelung zwischen Haube 2 und Taster 7. Als Zwischenelemente 8 können fingerartige Fortsätze der Haube 2 vorgesehen sein, die vorzugsweise wie die Haube 2 selbst aus einem elastischen Material, z. B. einem elastischen Kunststoff bestehen können. Dabei überbrückt das Zwischenelement 8 einen Abstand zwischen der Haube 2 und dem in der Ausnehmung 16 liegenden Mitnahmerand 17 des Tasters 7.

## Patentansprüche

1. Selbstfahrendes Arbeitsgerät, insbesondere Rasenmäher, mit einem Fahrgestell (5) und einem Antriebsmotor (3, 39), und mit einer am Fahrgestell (5) befestigten Haube (2), die auf dem Fahrgestell (5) gehaltene Geräteeinheiten übergreift, wobei die Haube (2) relativ zum Fahrgestell (5) beweglich gehalten ist, und mit einem Sensor, der eine Auslenkung der Haube (2) relativ zum Fahrgestell (5) erfasst und abhängig von der Relativlage der Haube (2) ein Ausgangssignal zum Abschalten des Antriebsmotors (3, 39) abgibt,
wobei auf dem Fahrgestell (5) ein manuelles Schaltelement (6) zum Abschalten des Antriebsmotors (3, 39) angeordnet ist, das manuelle Schaltelement (6) einen Taster (7) aufweist, der manuell zugänglich in einer Ausnehmung (16) der Haube (2) liegt, und der Taster (7) unabhängig von der Haube (2) zu betätigen ist,
**dadurch gekennzeichnet, dass** die Haube (2) und der Taster (7) derart miteinander gekoppelt sind, dass ein Niederdrücken der Haube (2) den Taster (7) mitnimmt.

2. Selbstfahrendes Arbeitsgerät nach Anspruch 1,
**dadurch gekennzeichnet, dass** die Haube (2) einen Mitnahmerand (17) des Tasters (7) übergreift.

3. Selbstfahrendes Arbeitsgerät nach Anspruch 2,
**dadurch gekennzeichnet, dass** die Haube (2) in ihrer Ruhestellung auf dem Mitnahmerand (17) des Tasters (7) anliegt.

4. Selbstfahrendes Arbeitsgerät nach einem der Ansprüche 1 bis 3,
**dadurch gekennzeichnet, dass** der Taster (7) über die Oberseite der Haube (2) übersteht.

5. Selbstfahrendes Arbeitsgerät nach einem der Ansprüche 1 bis 4,
**dadurch gekennzeichnet, dass** der Taster (7) in einer Signalfarbe ausgeführt ist.

6. Selbstfahrendes Arbeitsgerät nach einem der Ansprüche 1 bis 5,
**dadurch gekennzeichnet, dass** im Taster (7) eine Anzeigeeinrichtung (11) angeordnet ist.

7. Selbstfahrendes Arbeitsgerät nach einem der Ansprüche 1 bis 6,
**dadurch gekennzeichnet, dass** der Taster (7) aus einem lichtdurchlässigen Material, insbesondere einem transparenten, klaren Material besteht.

8. Selbstfahrendes Arbeitsgerät nach einem der Ansprüche 1 bis 7,
**dadurch gekennzeichnet, dass** das Schaltelement (6) ein elektrischer Schalter (4) ist, der in einer ersten Schaltstellung den Antriebsmotor (3, 39) abschaltet und in einer zweiten Schaltstellung den Antriebsmotor (3, 39) betriebsbereit schaltet.

## Claims

1. Self-propelled working implement, in particular lawnmower, comprising a chassis (5) and a drive motor (3, 39) as well as a hood (2), which is secured to the chassis (5) and encompasses the implement units mounted on the chassis (5), the hood (2) being movable relative to the chassis (5), and further comprising a sensor which detects a displacement of the hood (2) relative to the chassis (5) and emits an output signal for switching off the drive motor (3, 39) as a function of the relative position of the hood (2), wherein a manual switching element (6) for switching off the drive motor (3,39) is located on the chassis (5), wherein the manual switching element (6) comprises a pushbutton (7) lying in a recess (16) of the hood (2) for manual access, and wherein the pushbutton (7) can be operated independently of the hood (2),
**characterised in that** the hood (2) and the pushbutton (7) are coupled to each other in such a way that a downward pressure on the hood (2) drives the pushbutton (7) along with it.

2. Self-propelled working implement according to claim 1,
**characterised in that** the hood (2) overlaps a driving edge (17) of the pushbutton (7).

3. Self-propelled working implement according to claim 2,
**characterised in that** the hood (2) lies on the driving edge (17) of the pushbutton (7) in its neutral position.

4. Self-propelled working implement according to any of claims 1 to 3, **characterised in that** the pushbutton (7) projects above the top side of the hood (2).

5. Self-propelled working implement according to any of claims 1 to 4, **characterised in that** the pushbutton (7) is designed in a signal colour.

6. Self-propelled working implement according to any of claims 1 to 5, **characterised in that** a display device (11) is provided in the pushbutton (7).

7. Self-propelled working implement according to any of claims 1 to 6, **characterised in that** the pushbutton (7) is made of a non-opaque material, in particular of a transparent, clear material.

8. Self-propelled working implement according to any of claims 1 to 7, **characterised in that** the switching element (6) is an electric switch (4), which switches the drive motor (3, 39) off in a first switching position and switches the drive motor (3, 39) into an operational state in a second switching position.

## Revendications

1. Appareil de travail automobile, en particulier tondeuse à gazon, avec un châssis (5) et un moteur d'entraînement (3, 39), et avec un capot (2), fixé au châssis (5), qui couvre des unités d'appareil fixées sur le châssis (5), étant précisé que le capot (2) est fixé de manière mobile au châssis (5), et avec un capteur qui détecte une déviation du capot (2) par rapport au châssis (5) et qui, en fonction de la position relative du capot (2), émet un signal de sortie pour arrêter le moteur d'entraînement (3, 39), étant précisé qu'il est prévu sur le châssis (5) un élément de commutation manuel (6) pour arrêter le moteur d'entraînement (3, 39), que l'élément de commutation manuel (6) comporte un bouton-poussoir (7) qui se trouve dans un creux (16) du capot (2) de manière à être accessible manuellement, et que le bouton-poussoir (7) est à actionner indépendamment du capot (2), **caractérisé en ce que** le capot (2) et le bouton-poussoir (7) sont accouplés de telle sorte qu'une pression sur le capot (2) entraîne le bouton-poussoir (7).

2. Appareil de travail automobile selon la revendication 1,
**caractérisé en ce que** le capot (2) couvre un bord d'entraînement (17) du bouton-poussoir (7).

3. Appareil de travail automobile selon la revendication 2,
**caractérisé en ce que** le capot (2), dans sa position de repos, est appliqué sur le bord d'entraînement (17) du bouton-poussoir (7).

4. Appareil de travail automobile selon l'une des revendications 1 à 3, **caractérisé en ce que** le bouton-poussoir (7) dépasse du côté supérieur du capot (2).

5. Appareil de travail automobile selon l'une des revendications 1 à 4, **caractérisé en ce que** le bouton-poussoir (7) est réalisé dans une couleur de signalisation.

6. Appareil de travail automobile selon l'une des revendications 1 à 5, **caractérisé en ce qu'**un dispositif indicateur (11) est disposé dans le bouton-poussoir (7).

7. Appareil de travail automobile selon l'une des revendications 1 à 6, **caractérisé en ce que** le bouton-poussoir (7) se compose d'un matériau translucide, en particulier un matériau clair et transparent.

8. Appareil de travail automobile selon l'une des revendications 1 à 7, **caractérisé en ce que** l'élément de commutation (6) est un commutateur électrique (4) qui arrête le moteur d'entraînement (3, 39), dans une première position de commutation, et amène le moteur d'entraînement (3, 39) dans un état de marche, dans une seconde position de commutation.
